# EUROPÄISCHE PATENTANMELDUNG

(11) **EP 2 120 017 A1**
(43) Veröffentlichungstag der Anmeldung: **18.11.2009**
(21) Anmeldenummer: 08156079.9
(22) Anmeldetag: 13.05.2008
(51) Int. Cl.: G01D 5/14

(54) **Drehwegsensor**

(71) Anmelder: Hella KGaA Hueck & Co., 59552 Lippstadt (DE)
(72) Erfinder: Hellmann, Bernd, 33378, Rheda-Wiedenbrück (DE); Irle, Henning, 59557, Lippstadt (DE)

(57) **Zusammenfassung**

Sensor zur Messung eines von einem drehbaren Element bezogen auf eine Ausgangsstellung zurückgelegten Drehweges, umfassend
- ein erstes Sensormittel (1) zum Messen einer Drehstellung des drehbaren Elements mit einem oder mehreren Erfassungsbereichen,
- wobei das erste Sensormittel (1) geeignet und eingerichtet ist in jedem Erfassungsbereich die Drehstellung des drehbaren Elements bezogen auf eine Stellung am Anfang des jeweiligen Erfassungsbereichs zur erfassen, und
- ein zweites Sensormittel (2) zum Erfassen und Speichern einer Zahl,
- die hochgezählt wird, sobald einer der Erfassungsbereiche des ersten Sensormittels (1) durch eine Drehung des drehbaren Elements in eine erste Drehrichtung überstrichen wird, und
- die heruntergezählt wird, sobald einer der Erfassungsbereiche des ersten Sensormittels (1) durch eine Drehung des drehbaren Elements in einer zweiten, der ersten Drehrichtung entgegen gesetzten Drehrichtung überstrichen wird,

- wobei das erste Sensormittel (1) ein induktiver Winkelsensor ist, wobei das zweite Sensormittel (2) einen Zähler umfasst, der auf dem Effekt des Riesenmagnetwiderstandes beruht.

## Beschreibung

Die Erfindung betrifft einen Sensor zur Messung eines von einem drehbaren Element bezogen auf eine Ausgangsstellung zurückgelegten Drehweges.

Ein solcher Sensor kann ein erstes Sensormittel zum Messen einer Drehstellung des drehbaren Elements mit einem oder mehreren Erfassungsbereichen umfassen. Das erste Sensormittel kann dabei geeignet und eingerichtet sein in jedem Erfassungsbereich die Drehstellung des drehbaren Elements bezogen auf eine Stellung am Anfang des jeweiligen Erfassungsbereichs zur erfassen.

Ferner kann ein solcher Sensor ein zweites Sensormittel zum Erfassen und Speichern einer Zahl-aufweisen, wobei die Zahl hochgezählt wird, sobald einer der Erfassungsbereiche des ersten Sensormittels durch eine Drehung des drehbaren Elements in einer ersten Drehrichtung überstrichen wird, und die heruntergezählt wird, sobald einer der Erfassungsbereiche des ersten Sensormittels durch eine Drehung des drehbaren Elements in einer zweiten, der ersten Drehrichtung entgegengesetzten Drehrichtung überstrichen wird.

Aus dem Stand der Technik sind solche Sensoren bekannt. Sie weisen häufig als erste Sensormittel induktive Sensoren auf, bei denen die Drehstellung eines Rotors gegen einen Stator durch induktive Kopplung ermittelt werden kann. Derartige induktive Winkelsensoren oder Drehsensoren sind beispielsweise in den Offenlegungsschriften DE 100 26 019 A1, DE 101 56 238 A1, DE 101 59 110 A1 und DE 10 2004 027 954 offenbart.

Derartige induktive Sensoren benötigen ein zweites Sensormittel, mit denen gezählt werden kann, wie häufig der Erfassungsbereich des ersten Sensormittels, d.h. des induktiven Sensors vollständig überstrichen worden ist. Nur so kann der Drehweg festgestellt werden, der zurückgelegt wird, wenn die Drehung über den Erfassungsbereich des induktiven Sensors beziehungsweise des ersten Sensormittels hinausgeht. In dem zweiten Sensormittel wird dann eine Zahl hochgezählt oder heruntergezählt, je nachdem welcher Drehsinn die Drehung hat. Diese Zahl multipliziert mit der Größe des Erfassungsbereichs des ersten Sensormittels zuzüglich der Drehstellung des Rotos des ersten Sensormittels ergibt dann den zurückgelegten Drehweg.

Nach dem Stand der Technik gibt es für die zweiten Sensormittel zwei technische Lösungen. Zum Einen kann es sich bei dem zweiten Sensormittel um einen mechanischen Zähler handeln, der über ein Getriebe mit dem Rotor des ersten Sensormittels gekoppelt ist. Eine Alternative dazu ist ein elektronischer Rundenzähler, der allerdings einen Strom benötigt, um die gespeicherte Zahl der zurückgelegten Überstreichungen des Erfassungsbereichs zu speichern.

Wünschenswert ist dagegen ein Sensor, bei dem das zweite Sensormittel berührungslos die Anzahl der Überstreichungen des Erfassungsbereichs zählen kann und in dem diese Zahl auch ohne Ruhestrom gespeichert werden kann.

Hier setzt die vorliegende Erfindung an.

Der Erfindung liegt die Aufgabe zu Grunde, einen Sensor der eingangs genannten Art so zu verbessern, dass er die Anzahl der Überstreichungen des Erfassungsbereichs des ersten Sensormittels auch ohne elektrische Spannungsversorgung speichern kann und zusätzlich die Information der Anzahl der vollständigen Überstreichungen des Erfassungsbereichs berührungslos d.h. ohne mechanische Kopplung erfassen kann.

Diese Aufgabe wird erfindungsgemäß dadurch gelöst, dass das zweite Sensormittel einen Zähler umfasst, der auf dem Effekt des Riesenmagnetwiderstands (giant magentoresistance GMR) beruht.

Ein solcher Zähler hat den Vorteil, dass er einerseits nur berührungslos hochgezählt oder heruntergezählt werden kann und gleichzeitig zum Speichern der Zahlen keine Spannungsversorgung benötigt und auch nach einem Ausschalten einer Spannungsversorgung den gespeicherten Wert behält. Der gespeicherte Wert steht nach einer Wiederinbetriebnahme des Sensors sofort wieder zur Verfügung, ohne dass besondere Initialisierungsroutinen abgearbeitet werden müssen. Ein solcher Sensor ist in der Lage unmittelbar nach der Inbetriebnahme ein Signal für den Drehweg auszugeben.

Der Sensor kann einen Stator und einen Rotor umfassen. Vorzugsweise sind der Stator und der Rotor Teil des ersten Sensormittels.

Das erste Sensormittel kann Leiterschleifen umfassen. Der Stator kann vorzugsweise einen Träger einer Leiterschleife zum Senden und eine Leiterschleife zum Empfangen umfassen. Der Rotor umfasst dagegen vorteilhaft einen Träger für eine Leiterschleife zur elektromagnetischen Kopplung von elektromagnetischen Schwingungen in der Leiterschleife zum Senden und der Leiterschleife zum Empfangen.

Das zweite Sensormittel eines erfindungsgemäßen Sensors kann einen oder mehrere Magnete und eine oder mehrere Speicherstrukturen umfassen. Der Magnet oder die Magnete können auf dem Rotor oder dem Stator angeordnet sein. Die Speicherstruktur oder die Speicherstrukturen sind dann jeweils auf dem anderen der beiden Teile angeordnet.

Die Magnete und/oder die Speicherstrukturen, insbesondere ein Grenzflächenerzeuger der Speicherstrukturen sind auf einem Kreis um die Rotorachse angeordnet, unabhängig davon ob sie auf dem Rotor oder dem Stator angeordnet sind.

Der Erfassungsbereich des ersten Sensormittels kann sich über 360° erstrecken. Sind mehrere Erfassungsbereiche beim ersten Sensormittel vorgesehen, decken diese vorzugsweise einen ganzzahligen Bruchteil eines Kreises um die Rotorachse ab. Die Unterteilung der Erfassungsbereiche wird durch die Ausgestaltung der Leiterschleifen auf dem Rotor und/oder dem Stator vorgegeben.

Die Anzahl der Magnete und/oder der Speicherstrukturen des zweiten Sensormittels kann der Anzahl der Erfassungsbereiche des ersten Sensormittels entsprechen. Denkbar ist allerdings insbesondere, dass einerseits mehrere Erfassungsbereiche vorgesehen sind und andererseits nur ein Magnet und eine Speicherstruktur.

Die Magnete sind vorteilhaft gleichmäßig auf dem Kreis um die Rotorachse angeordnet.

Ein erfindungsgemäßer Sensor kann ein Auswertemittel aufweisen, welches mit dem ersten Sensormittel und dem zweiten Sensormittel verbunden ist. Das Auswertemittel ist geeignet und eingerichtet aus der von dem ersten Sensormittel ermittelten Drehstellung und der von dem zweiten Sensormittel ermittelten Zahl der überstrichenen Erfassungsbereiche den zurückgelegten Drehweg zu ermitteln. Dazu wird beispielsweise die Anzahl der überstrichenen Erfassungsbereiche mit dem Erstreckungswinkel der Erfassungsbereiche multipliziert und die vom ersten Sensormittel angegebene aktuelle Drehstellung des ersten Rotors hinzugezählt.

Das Auswertemittel kann eine Mikroprozessorsteuerung (Microcontroller) sein.

Das zweite Sensormittel eines erfindungsgemäßen Sensors kann geeignet und eingerichtet sein mittels des Magnets oder der Magnete in jeder Speicherstruktur durch Überstreichen eines dieser Speicherstruktur zugeordneten Grenzflächenerzeugers Grenzflächen zwischen Schichten unterschiedlicher magnetischer Ausrichtung zu erzeugen, aufzuheben oder zu verschieben. Je nach Drehsinn kann bei jedem Überstreichen des Grenzflächenerzeugers oder eines der Grenzflächenerzeugers mit dem Magnet oder mit einem der Magnete eine Schicht erzeugt oder aufgehoben werden. Mit jedem Aufheben oder Erzeugen einer Grenzfläche wird der ohmsche Widerstand der Speicherstruktur erhöht oder verringert. So ist es möglich, dass die Speicherstruktur in Abhängigkeit von der Anzahl der Schichten unterschiedlicher magnetischer Ausrichtung unterscheidbare elektrische Widerstandswerte hat.

Ein solches zweites Sensormittel kann Elemente aufweisen, die geeignet und eingerichtet sind, aus den Widerstandswerten der Speicherstruktur ein die Zahl der überstrichenen Erfassungsbereiche angebendes elektrisches Signal zu erzeugen. Dazu kann beispielsweise eine Messbrücke vorgesehen sein, in welcher vier miteinander verschaltete Speicherstrukturen vorgesehen sind.

Anhand der beigefügten Zeichnungen wird die Erfindung nachfolgend näher erläutert. Dabei zeigt:
- Fig. 1: ein Blockschaltbild des erfindungsgemäßen Sensors,
- Fig. 2: ein Schaltbild eines zweiten Sensormittels des erfindungsgemäßen Sen- sors gemäß Fig. 1 und
- Fig. 3: eine perspektivische Darstellung des zweiten Sensormittels.
- Fig. 4: eine perspektivische Darstellung eines weiteren zweiten Sensormittels

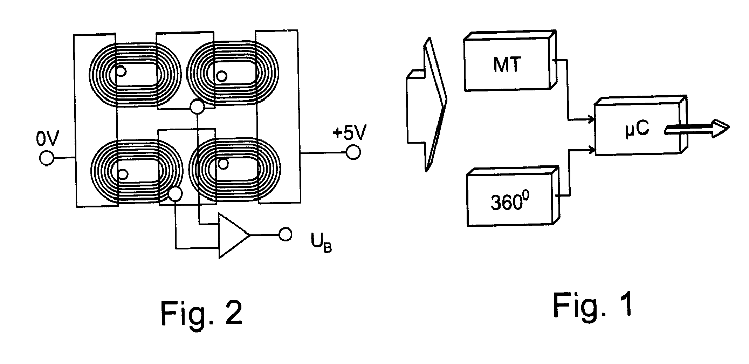

Der im Blockschaltbild der Figur 1 dargestellte erfindungsgemäße Sensor umfasst ein erstes Sensormittel 1 und ein zweites Sensormittel 2.

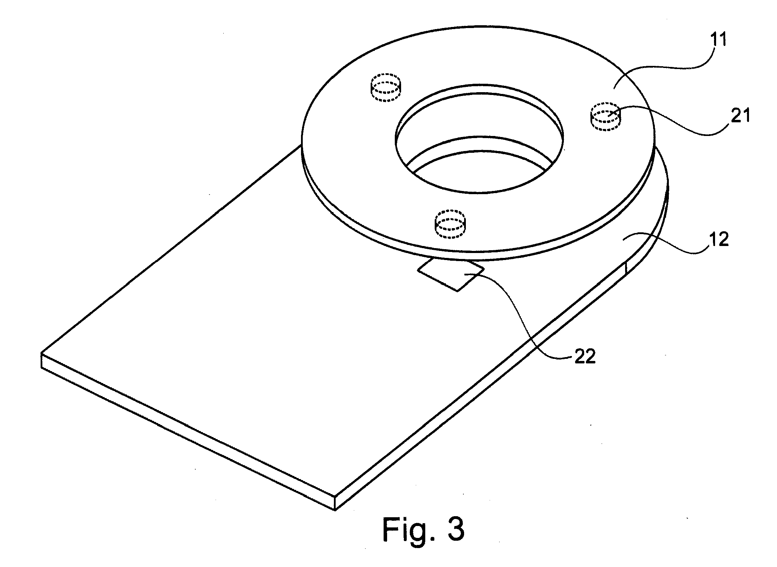

Bei dem ersten Sensormittel 1 (Fig. 3) handelt es sich um einen induktiven Winkelsensor, umfassend einen Rotor 11 und einen Stator 12. Auf dem Stator sind eine Leiterschleife zum Senden einer elektromagnetischen Schwingung und eine Leiterschleife zum Empfangen einer elektromagnetischen Schwingung vorgesehen (beide nicht dargestellt). Auf dem Rotor 11 ist dagegen eine Leiterschleife (ebenfalls nicht dargestellt) vorgesehen, in die die gesendete elektromagnetische Schwingung eingekoppelt wird, und die ihrerseits eine elektromagnetische Welle auskoppelt, die von der Leiterschleife zum Empfangen in ein elektrisches Signal umgewandelt wird. Anhand des elektrischen Signals kann erkannt werden, welche Stellung der Rotor 11 und der Stator 12 zueinander haben.

Das erste Sensormittel 1 ist so ausgestaltet, dass mit dem Sensormittel ein Winkelbereich von 360° erfasst werden kann. Der Erfassungsbereich entspricht somit einer vollen Drehung des Rotors 11.

Mittels des ersten Sensormittels 1 kann somit jederzeit festgestellt werden, welche Drehstellung der Rotor 11 und der Stator 12 zueinander haben. Anhand des in der Leiterschleife zum Empfangen erzeugten elektrischen Signals kann der Winkel, um welchen der Rotor 11 gegenüber dem Stator 12 verdreht worden ist, angegeben werden.

Der Rotor 11 kann gegenüber dem Stator 12 um mehr als 360°, d.h. um mehr als eine volle Drehung verdreht werden. Eine Erfassung des dabei von dem Rotor 11 zurückgelegten Drehweges mittels des ersten Sensormittels 1 ist allerdings nicht möglich. Es wird jeweils immer nur die aktuelle Drehstellung des Rotors 11 zum Stator 12 angegeben.

Um festzustellen, ob der Erfassungsbereich des ersten Sensormittels 1 einmal vollständig überstrichen worden ist und wenn ja wie oft, ist das zweite Sensormittel 2 vorgesehen.

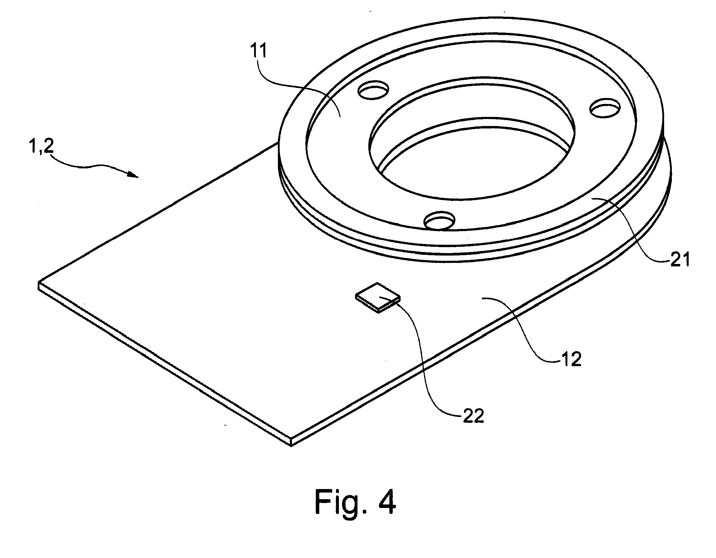

Das zweite Sensormittel 2 weist einen Magneten 21 (Fig. 4) oder mehrere Magneten 21 (Fig. 3) auf, die an dem Rotor 11 des ersten Sensormittels 1 angebracht sind. An dem Stator 12 sind dagegen vier Speicherstrukturen 22 vorgesehen.

Jeder Speicherstruktur 22 ist ein Grenzflächenerzeuger 221 zugeordnet. Wird ein Grenzflächenerzeuger 221 von einem Magneten 21 überstrichen, wird in der Speicherstruktur 22 eine Grenzfläche ausgebildet, die zwei Schichten voneinander trennt, die eine unterschiedliche magnetische Orientierung haben. Durch die Erzeugung dieser Grenzfläche erhöht sich der elektrische Widerstand der Speicherstruktur 22. Wird der Grenzflächenerzeuger im gleichen Drehsinn nochmals von einem Magneten 21 überstrichen, wird eine weitere Grenzfläche erzeugt, so dass insgesamt drei Schichten unterschiedlicher magnetischer Orientierung in der Speicherstruktur 22 ausgebildet sind.

Mit jedem weiteren Überstreichen des Grenzflächenerzeugers 221 in der gleichen Drehrichtung werden weitere Grenzenflächen erzeugt, die den ohmschen Widerstand der Speicherstruktur 22 weiter erhöhen.

Wird dagegen der Grenzflächenerzeuger 221 in umgekehrter Drehrichtung von einem Magneten 21 überstrichen, wird die Anzahl der Grenzflächen reduziert, was auch den elektrischen Widerstand der Speicherstruktur 22 herabsetzt.

Wird der Magnet des zweiten Sensormittels 2 so an dem Rotor 11 des ersten Sensormittels 1 angebracht, dass bei jedem vollständigen Überstreichen des Erfassungsbereichs des ersten Sensormittels 1 ein Magnet 21 des zweiten Sensormittels 2 über die Grenzflächenerzeuger 221 eine der vier Speicherstrukturen streicht, bewirkt dies ein Erhöhen der Grenzflächenanzahl dieser Speicherstruktur. Dadurch wird der Widerstand der Speicherstruktur erhöht.

Die vier Speicherstrukturen 22, 22a, 22b, 22c sind zu einer Brückenschaltung (Fig. 2) verschaltet, wobei die Brückenspannung als Ausgangssignal des zweiten Sensormittels 2 abgegriffen wird und mit einem Ausgangssignal des ersten Sensormittels 1 einem Microcontroller beziehungsweise einer Mikroprozessorsteuerung µC zugeführt wird, die aus beiden Signalen den von dem Rotor 11 zurückgelegten Drehweg ermittelt.

### Bezugszeichenliste

- 1: erstes Sensormittel
- 2: zweites Sensormittel
- 11: Rotor
- 12: Stator
- 21: Magnet/Magnete
- 22: Speicherstruktur I
- 22a: Speicherstruktur II
- 22b: Speicherstruktur III
- 22c: Speicherstruktur IV
- 221: Grenzflächenerzeuger
- µC: Auswertemittel
- U_{B}: elektrisches Signal

## Patentansprüche

1. Sensor zur Messung eines von einem drehbaren Element bezogen auf eine Ausgangsstellung zurückgelegten Drehweges, umfassend
- ein erstes Sensormittel (1) zum Messen einer Drehstellung des drehbaren Elements mit einem oder mehreren Erfassungsbereichen,
- wobei das erste Sensormittel geeignet und eingerichtet ist in jedem Erfassungsbereich die Drehstellung des drehbaren Elements bezogen auf eine Stellung am Anfang des jeweiligen Erfassungsbereichs zu erfassen, und
- ein zweites Sensormittel (2) zum Erfassen und Speichern einer Zahl,
- die hochgezählt wird, sobald einer der Erfassungsbereiche des ersten Sensormittels (1) durch eine Drehung des drehbaren Elements in eine erste Drehrichtung überstrichen wird, und
- die heruntergezählt wird, sobald einer der Erfassungsbereiche des ersten Sensormittels (1) durch eine Drehung des drehbaren Elements in einer zweiten, der ersten Drehrichtung entgegengesetzten Drehrichtung überstrichen wird,
- wobei das erste Sensormittel (1) ein induktiver Winkelsensor ist,
**dadurch gekennzeichnet,**
**dass** das zweite Sensormittel (2) einen Zähler umfasst, der auf dem Effekt des Riesenmagnetwiderstandes beruht.

2. Sensor nach Anspruch 1, **dadurch gekennzeichnet, dass** der Sensor einen Stator (12) und einen Rotor (11) umfasst.

3. Sensor nach Anspruch 2, **dadurch gekennzeichnet, dass** das erste Sensormittel (1) Leiterschleifen umfasst und dass der Stator (12) einen Träger einer Leiterschleife zum Senden und eine Leiterschleife zum Empfangen umfasst und der Rotor einen Träger für eine Leiterschleife zur elektromagnetischen Kopplung der Leiterschleife zum Senden und der Leiterschleife zum Empfangen umfasst.

4. Sensor nach Anspruch 2 oder 3, **dadurch gekennzeichnet, dass** das zweite Sensormittel (2) einen oder mehrere Magnete (21) und eine oder mehrere Speicherstrukturen (22) umfasst, wobei der Magnet (21) oder die Magneten (21) auf dem Rotor (11) oder dem Stator (12) und die Speicherstruktur (22) oder die Speicherstrukturen (22) auf dem jeweils anderen der beiden Teile (11, 12) angeordnet ist bzw. sind.

5. Sensor nach Anspruch 4, **dadurch gekennzeichnet, dass** der Magnet (21) oder die Magnete (21) und/oder die Speicherstruktur (22) oder die Speicherstrukturen (22) auf einem Kreis um die Rotorachse angeordnet sind.

6. Sensor nach einem der Ansprüche 1 bis 5, **dadurch gekennzeichnet, dass** die Erfassungsbereiche des ersten Sensormittels (1) einen ganzzahligen Bruchteil eines Kreises um die Rotorachse abdecken.

7. Sensor nach Anspruch 5 und 6, **dadurch gekennzeichnet, dass** das zweite Sensormittel über ausreichend Speicherstrukturen verfügt, um mindestens die Anzahl der Erfassungsbereiche des ersten Sensormittels über den Gesamtdrehwinkel zu erfassen.

8. Sensor nach Anspruch 5 und 6, **dadurch gekennzeichnet, dass** die Anzahl der Magnete (21) und/oder der Speicherstrukturen (22) des zweiten Sensormittels (2) der Anzahl der Erfassungsbereiche des ersten Sensormittels (1) entspricht.

9. Sensor nach Anspruch 8, **dadurch gekennzeichnet, dass** die Magnete (21) gleichmäßig verteilt auf dem Kreis angeordnet sind.

10. Sensor nach einem der Ansprüche 1 bis 9, **dadurch gekennzeichnet, dass** der Sensor ein Auswertemittel (µC) aufweist, welches mit dem ersten Sensormittel (1) und dem zweiten Sensormittel (2) verbunden ist und welches geeignet und eingerichtet ist aus der von dem ersten Sensormittel (1) ermittelten Drehstellung und der von dem zweiten Sensormittel (2) ermittelten Zahl der überstrichenen Erfassungsbereiche den zurückgelegten Drehweg zu ermitteln.

11. Sensor nach Anspruch 10, **dadurch gekennzeichnet, dass** das Auswertemittel eine Mikroprozessorsteuerung (µC), ein FPGA oder ein ASIC ist.

12. Sensor nach einem der Ansprüche 4 bis 11, **dadurch gekennzeichnet, dass** das zweite Sensormittel (2) geeignet und eingerichtet ist mittels des Magnets (21) oder der Magnete (21) in jeder Speicherstruktur (22) durch Überstreichen eines dieser Speicherstruktur (22) zugeordneten Grenzflächenerzeugers (221) Grenzflächen zwischen Schichten unterschiedlicher magnetischer Ausrichtung zu Erzeugen, Aufzuheben und zu Verschieben.

13. Sensor nach Anspruch 12, **dadurch gekennzeichnet, dass** je nach Drehsinn bei jedem Überstreichen des Grenzflächenerzeugers (221) oder eines der Grenzflächenerzeugers (221) mit dem Magnet (21) oder einem der Magnete (21) eine Schicht erzeugt oder aufgehoben wird.

14. Sensor nach Anspruch 12 oder 13, **dadurch gekennzeichnet, dass** die Speicherstruktur (22) in Abhängigkeit von der Anzahl der unterschiedlicher Schichten unterschiedlicher magnetischer Ausrichtung unterscheidbare elektrische Widerstandswerte hat.

15. Sensor nach Anspruch 13, **dadurch gekennzeichnet, dass** das zweite Sensormittel (2) Elemente aufweist, die geeignet und eingerichtet sind aus den Widerstandswerten der Speicherstruktur ein die Zahl der überstrichenen Erfassungsbereiche angebendes elektrisches Signal (U_{B}) zu erzeugen.

16. Sensor nach einem der Ansprüche 4 bis 15, **dadurch gekennzeichnet, dass** das zweite Sensormittel (2) vier zu einer Messbrücke verschaltete Speicherstrukturen (22, 22a, 22b, 22c) aufweist.
